# EUROPEAN PATENT SPECIFICATION

(11) **EP 4 283 711 B1**
(45) Date of publication and mention of the grant of the patent: **04.11.2026**
(21) Application number: 22883825.6
(22) Date of filing: 30.09.2022
(51) Int. Cl.: H01M 4/134, H01M 4/131, H01M 4/36, H01M 4/38, H01M 4/48, H01M 4/1395, H01M 4/1391, H01M 4/04, H01M 4/62, H01M 10/052, H01M 4/02

(54) **ANODE FOR LITHIUM SECONDARY BATTERY, LITHIUM SECONDARY BATTERY INCLUDING ANODE, AND MANUFACTURING METHOD FOR ANODE FOR LITHIUM SECONDARY BATTERY**
ANODE FÜR LITHIUMSEKUNDÄRBATTERIE, LITHIUMSEKUNDÄRBATTERIE MIT DER ANODE UND HERSTELLUNGSVERFAHREN FÜR ANODE FÜR LITHIUMSEKUNDÄRBATTERIE
ANODE POUR BATTERIE SECONDAIRE AU LITHIUM, BATTERIE SECONDAIRE AU LITHIUM COMPRENANT UNE ANODE, ET PROCÉDÉ DE FABRICATION D'ANODE POUR BATTERIE SECONDAIRE AU LITHIUM

(30) Priority: 22.10.2021 KR 20210142046; 19.01.2022 KR 20220007656
(43) Date of publication of application: 29.11.2023
(73) Proprietor: LG Energy Solution, Ltd., Seoul 07335 (KR)
(72) Inventor: PARK, Su Jin, Daejeon 34122 (KR); LEE, Jaewook, Daejeon 34122 (KR); KWON, Yohan, Daejeon 34122 (KR); JUN, Chan Soo, Daejeon 34122 (KR)
(74) Representative: Hoffmann Eitle
(86) International application number: PCT/KR2022/014836
(87) International publication number: WO 2023/068601

(56) References cited:
- EP-A1- 3 872 896
- JP-A- 2011 233 497
- JP-B2- 6 237 777
- KR-A- 20140 026 855
- US-A1- 2016 087 268
- US-A1- 2016 285 081
- US-B2- 9 537 145

## Description

### [Technical Field]

This application claims priority to and the benefit of Korean Patent Application No. 10-2021-0142046 filed in the Korean Intellectual Property Office on October 22, 2021, and Korean Patent Application No. 10-2022-0007656 filed in the Korean Intellectual Property Office on January 19, 2022.

The present application relates to a negative electrode for a lithium secondary battery, a lithium secondary battery including a negative electrode, and a method for preparing negative electrode for a lithium secondary battery.

### [BACKGROUND ART]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

In particular, recently, in response to the demand for a high-density energy battery, studies have been actively conducted on a method for increasing the capacity using a silicon-based compound such as Si/C or SiOx, which has a 10-fold higher capacity than a graphite-based material, as a negative electrode active material. However, the silicon-based compound, which is a high-capacity material, is a material having a high capacity compared to graphite used in the related art, and has excellent capacity characteristics, but the volume rapidly expands during the charging process to disconnect the conductive path, resulting in deterioration in battery characteristics, and accordingly, the capacity decreases from the initial stage.

When the charging and discharging cycle of a silicon-based negative electrode is repeated, lithium ion are not uniformly charged in the depth direction of the negative electrode, a silicon-based active material present on the surface during charging and discharging first degrades, and as a result, pulverization occurs, and as the battery cycle progresses, the reaction heterogeneity is aggravated in the depth direction of the negative electrode, and this change makes the service life performance of an electrode to which the silicon-based active material is applied rapidly deteriorate. That is, an electrode using a Si active material has excellent capacity characteristics compared to an electrode using SiO and an electrode using a carbon-based active material. However, in the case of an electrode using a Si active material, electrode deterioration occurs intensively on the surface due to rapid reaction with Li ions during charge/discharge. That is, there is a problem that the reaction is mainly performed only on the surface due to the non-uniformity of the reaction between Li ions and silicon particles, and thus, the reaction is not uniformly performed in the depth direction of the negative electrode, resulting in deterioration of life performance due to surface degradation.

Thus, to solve problems when the silicon-based compound is used as a negative electrode active material, measures to adjust the driving potential, additionally, measures to suppress the volume expansion itself such as methods of coating the active material layer with a thin film and methods of adjusting the particle diameter of the silicon-based compound, various measures to prevent the conductive path from being disconnected, and the like have been discussed, but there is a limitation in the application of the measures because the performance of a battery may rather deteriorate due to the measures, so that there is still a limitation in the commercialization of preparation of a battery having a negative electrode with a high content of the silicon-based compound.

Therefore, to solve the aforementioned problems, studies have been conducted to improve the service life performance of a silicon-based negative electrode by solving the heterogeneity of the internal reaction on the surface portion and in the depth direction in the silicon-based negative electrode.

### <Related Art Document>

(Patent Document 1) Japanese Patent Application Laid-Open No. 2009-080971. US2016285081 discloses a silicon-based negative electrode for lithium-ion batteries comprising a bilayer active material with graded silicon oxide content; a Si-rich layer on the current collector and an oxide-rich surface layer.

### [Disclosure]

### [Technical Problem]

The present invention has been made in an effort to provide a negative electrode for a lithium secondary battery, which can maximize the capacity using a silicon-based active material in the negative electrode and simultaneously prevent the electrode surface degradation during the charging and discharging cycle, which is an existing problem without generating the problem of deterioration in capacity, a lithium secondary battery including a negative electrode, and a method for preparing a negative electrode for a lithium secondary battery.

### [Technical Solution]

The invention is set out in the appended set of claims.

An exemplary embodiment of the present invention provides a negative electrode for a lithium secondary battery, comprising: a negative electrode current collector layer; and a negative electrode active material layer provided on one surface of the negative electrode current collector layer, wherein the negative electrode active material layer comprises a negative electrode composition comprising: a negative electrode active material; a negative electrode conductive material; and a negative electrode binder, the negative electrode active material comprises Si and SiO, a weight ratio of the Si:SiO is 65:35 to 85:15, and in the negative electrode active material layer, a content of SiO on a surface opposite to the surface facing the negative electrode current collector layer is higher than a content of SiO on the surface facing the negative electrode current collector layer.

Another exemplary embodiment provides a method for preparing a negative electrode for a lithium secondary battery, the method including: applying a first negative electrode composition including: a negative electrode active material including Si; a negative electrode conductive material; and a negative electrode binder onto a negative electrode current collector layer; and forming a negative electrode active material layer by applying a second negative electrode composition including SiO onto the first negative electrode composition, in which the Si is included in an amount of 60 parts by weight based on 100 parts by weight of the negative electrode active material included in the first negative electrode composition, a weight ratio of Si:SiO of the negative electrode active material layer is 65:35 to 85:15, and the negative electrode active material layer has a higher content of SiO on a surface opposite to a surface facing the negative electrode current collector layer than a content of SiO on a surface facing the negative electrode current collector layer.

At this time, the first negative electrode composition is applied on the negative electrode current collector layer, and the second negative electrode composition is applied on the first negative electrode composition. At this time, both wet on wet and wet on dry processes may be included. Specifically, a wet on wet process means that the second negative electrode composition is applied on top of the first negative electrode composition while the first negative electrode composition itself is still wet (ie, not dried). In addition, the wet on dry process means that the first negative electrode composition itself is completely dried and the second negative electrode composition is applied on top of the completely dried first negative electrode composition.

Still another exemplary embodiment provides a lithium secondary battery including: a positive electrode; the negative electrode for a lithium secondary battery according to the present application; a separator provided between the positive electrode and the negative electrode; and an electrolyte.

### [Advantageous Effects]

The negative electrode for a lithium secondary battery according to an exemplary embodiment of the present invention is characterized in that a negative electrode active material includes Si and SiO, in which the negative electrode active material layer has a higher content of SiO on a surface opposite to a surface facing the negative electrode current collector layer than a content of SiO on a surface facing the negative electrode current collector layer. Accordingly, the negative electrode has a feature capable of solving the reaction heterogeneity in the depth direction of the negative electrode in spite of repetition of the charging and discharging cycle of the battery by allowing a large amount of SiO having better reaction durability than Si to be distributed on the uppermost surface of the negative electrode.

In the case of the negative electrode for a lithium secondary battery according to an exemplary embodiment of the present invention, the ratio of Si:SiO included in the negative electrode active material satisfies 65:35 to 85:15. The negative electrode according to the present application has very good negative electrode capacity characteristics in terms of energy density by including Si at an optimal ratio compared to SiO, and has a feature of solving a problem of poor service life caused by the reaction heterogeneity by including Si according to the concentration gradient of SiO in the negative electrode active material layer as described above.

The negative electrode for a lithium secondary battery according to an exemplary embodiment of the present invention constitutes the concentration gradient of an active material in a single-layered negative electrode active material layer rather than using the negative electrode active material layer as two layers. Accordingly, the negative electrode for a lithium secondary battery according to an exemplary embodiment of the present invention has a feature capable of preventing a desorption phenomenon with the negative electrode current collector layer by including a small amount of Si which experiences a relatively small volume expansion depending on the charging and discharging even on a surface where the negative electrode current collector layer and the negative electrode active material layer are brought into contact with each other.

### [Brief Description of Drawings]

FIG. 1 is a view illustrating the stacking structure of a negative electrode for a lithium secondary battery according to an exemplary embodiment of the present application.
FIG. 2 is a view illustrating the stacking structure of a negative electrode for a lithium secondary battery according to an exemplary embodiment of the present application.
FIG. 3 is a view illustrating the stacking structure of a negative electrode for a lithium secondary battery according to an exemplary embodiment of the present application.
FIG. 4 is a view illustrating the stacking structure of a negative electrode for a lithium secondary battery according to an exemplary embodiment of the present application.
FIG. 5 is a view illustrating the stacking structure of a lithium secondary battery according to an exemplary embodiment of the present application.
FIG. 6 is a SEM photograph showing a cross-section of a negative electrode in which a negative electrode active material layer is formed on both sides of a negative electrode current collector layer according to the present application.

### [Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mini II manufactured by BEL Japan, Inc. That is, in the present application, the BET specific surface area may mean a specific surface area measured by the measurement method.

In the present specification, "Dn" means the particle diameter distribution, and means the particle diameter at the n% point of the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the particle diameter distribution may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described. Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides A negative electrode for a lithium secondary battery, comprising: a negative electrode current collector layer; and a negative electrode active material layer provided on one surface of the negative electrode current collector layer, wherein the negative electrode active material layer comprises a negative electrode composition comprising: a negative electrode active material; a negative electrode conductive material; and a negative electrode binder, the negative electrode active material comprises Si and SiO, a weight ratio of the Si:SiO is 65:35 to 85:15, and in the negative electrode active material layer, a content of SiO on a surface opposite to the surface facing the negative electrode current collector layer is higher than a content of SiO on the surface facing the negative electrode current collector layer.

In another exemplary embodiment, provided is a negative electrode for a lithium secondary battery, in which the negative electrode active material layer has a concentration gradient where the content of SiO is increased in a direction from a surface facing the negative electrode current collector layer to a surface opposite to the surface facing the negative electrode current collector layer.

In the case of the negative electrode for a lithium secondary battery according to an exemplary embodiment of the present invention, a negative electrode active material includes Si and SiO, and the negative electrode active material layer has the aforementioned concentration gradient. Accordingly, since the content of Si decreases toward the surface of the negative electrode active material layer, the negative electrode is mainly characterized in that it is possible to solve the reaction heterogeneity in the depth direction of the negative electrode in spite of repetition of the charging and discharging cycle of the battery by allowing a large amount of SiO having better reaction durability than Si to be distributed on the uppermost surface of the negative electrode.

That is, the negative electrode active material layer according to the present application includes Si and SiO at the aforementioned weight ratio in order to maximize capacity characteristics while using a single-layered negative electrode active material layer, and further, a main object of the present invention is to enhance the durability by minimizing the content part of Si on the surface portion of the negative electrode active material layer through a concentration gradient of SiO in the negative electrode active material layer with respect to a problem of the service life characteristics caused by the electrode surface degradation.

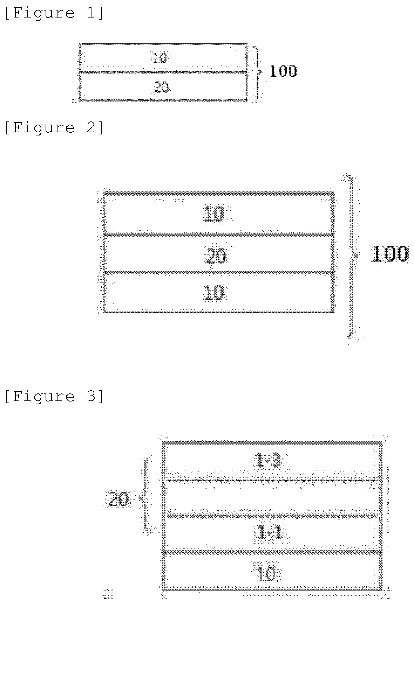

FIG. 1 is a view illustrating the stacking structure of a negative electrode for a lithium secondary battery according to an exemplary embodiment of the present application. Specifically, it is possible to confirm a negative electrode 100 for a lithium secondary battery, including a negative electrode active material layer 20 on one surface of a negative electrode current collector layer 10, and FIG. 1 illustrates the negative electrode active material layer formed on one surface, but the negative electrode active material layer may be included on both surfaces of the negative electrode current collector layer.

The present application provides a negative electrode for a lithium secondary battery in which the negative electrode active material layer is provided on both sides of the negative electrode collector layer.

Specifically, FIG. 2 is a view illustrating the stacking structure of a negative electrode for a lithium secondary battery according to an exemplary embodiment of the present application. As described above, the negative electrode active material layer is included on both sides of the negative electrode current collector layer, and the negative electrode 100 for a lithium secondary battery including the negative electrode active material layer 20 on both sides of the negative electrode current collector layer 10 can be confirmed. It is rare to substantially coat the single surface as shown in FIG. 1, and as shown in FIG. 2, the active material layer may be coated on both sides of the current collector layer. At this time, if the negative electrode composition of the present invention is included on at least one surface of the current collector layer, it is possible to manufacture a negative electrode. That is, the compositions of the active material layers coated on both sides may be the same or different from each other, and when the compositions are different, generally used active material layers such as carbon-based and silicon-based may be used, and most preferably, the negative electrode active material layer including the negative electrode composition according to the present application is coated on both surfaces.

In an exemplary embodiment of the present application, the negative electrode current collector layer generally has a thickness of 1 µm to 100 µm. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine convex and concave irregularities on the surface thereof, and the negative electrode current collector layer may be used in various forms such as a film, a sheet, a foil, a net, a porous body, a foaming body, and a nonwoven body.

In an exemplary embodiment of the present application, provided is a negative electrode for a lithium secondary battery, in which the negative electrode current collector layer has a thickness of 1 µm or more and 100 µm or less, and the negative electrode active material layer has a thickness of 20 µm or more and 500 µm or less.

However, the thickness may be variously modified depending on the type and use of the negative electrode used, and is not limited thereto.

In an exemplary embodiment of the present application, in a negative electrode for a lithium secondary battery, including: a negative electrode active material layer provided on one surface of the negative electrode current collector layer, the negative electrode active material layer includes a negative electrode composition including: a negative electrode active material; a negative electrode conductive material; and a negative electrode binder.

In an exemplary embodiment of the present application, the negative electrode active material includes Si and SiO, and the ratio of Si:SiO may be 65:35 to 85:15.

In another exemplary embodiment, the negative electrode active material includes Si and SiO, and the ratio of Si:SiO may satisfy a range of 65:35 to 85:15, preferably 70:30 to 85:15, and more preferably 70:30 to 80:20.

From the fact that the ratio of Si:SiO included in the negative electrode active material satisfies the above ratio, the negative electrode active material has a feature in which the capacity of the negative electrode is excellent in terms of energy density by including a larger amount of Si than that of SiO, a problem in that the service life is not good as Si is included is solved according to the concentration gradient of SiO in the negative electrode active material layer.

In an exemplary embodiment of the present application, provided is a negative electrode for a lithium secondary battery, in which the negative electrode active material layer has a concentration gradient where the content of SiO is increased and the content of Si is decreased in a direction from a surface facing the negative electrode current collector layer to a surface opposite to the surface facing the negative electrode current collector layer.

In an exemplary embodiment of the present application, provided is a negative electrode for a lithium secondary battery, in which the negative electrode active material layer includes: a junction region including a surface facing the negative electrode current collector layer; and a surface region including a surface opposite to the surface facing the negative electrode current collector, the weight ratio of Si:SiO in the junction region is 95:5 to 100:0, and the weight ratio of Si:SiO in the surface region is 5:95 to 0:100.

The ratios of Si and SiO in the surface region and junction region may be confirmed by a cross-sectional analysis. That is, for the ratio, Si and SiO were distinguished by the peaks of Si and O using images of the cross-section of the negative electrode active material layer to perform energy dispersive spectroscopy (EDS), respectively, and the aforementioned weight ratio may be measured by specifying particles in the image.

In an exemplary embodiment of the present application, the junction region means an internal region of the negative electrode active material layer including a surface of the negative electrode active material layer facing the current collector layer. In this case, the junction region may mean a region having a thickness X1% apart from a surface facing the negative electrode current collector layer based on the total thickness of the negative electrode active material layer.

In an exemplary embodiment of the present application, the surface region means an internal region of the negative electrode active material layer including a surface opposite to the surface facing the negative electrode current collector layer. In this case, the surface region may mean a region having a thickness X1% apart from a surface opposite to the surface facing the negative electrode current collector layer based on the total thickness of the negative electrode active material layer.

In an exemplary embodiment of the present application, the X1 may satisfy a range of 0.1 or more and 10 or less, preferably 1 or more and 5 or less.

In FIG. 3, the surface region and the junction region can be confirmed. Specifically, it can be confirmed that the surface region 1-3 is an internal region of the negative electrode active material layer including a surface opposite to a surface facing the negative electrode current collector layer, and the junction region 1-1 is an internal region of the negative electrode active material layer including a surface facing the current collector layer of the negative electrode active material layer.

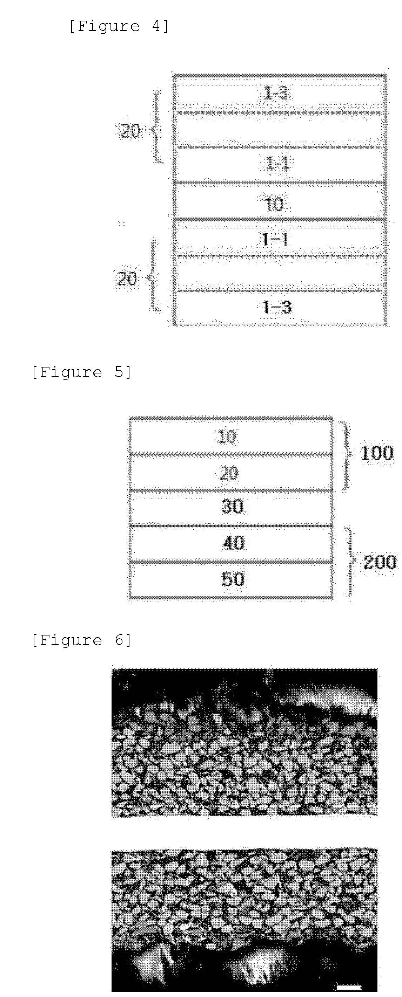

In addition, FIG. 4 may be the same as the description of FIG. 3 except that the negative electrode active material layer is provided on both sides of the negative electrode current collector layer.

As an example, when the negative electrode active material layer has a total thickness of 100 µm, the junction region may mean a region (X1=5%) of a thickness 5 µm apart from the surface facing the negative electrode current collector layer.

As an example, when the negative electrode active material layer has a total thickness of 100 µm, the surface region may mean a region (X1=5%) of a thickness 5 µm apart from a surface opposite to the surface facing the negative electrode current collector layer.

In an exemplary embodiment of the present application, the weight ratio of Si:SiO in the junction region is 95:5 to 100:0, preferably 97.5:2.5 to 100:0.

In an exemplary embodiment of the present application, the weight ratio of Si:SiO in the surface region is 5:95 to 0:100, preferably 2.5:97.5 to 0:100.

In an exemplary embodiment of the present application, provided is a negative electrode for a lithium secondary battery, in which the negative electrode active material layer is divided into three equal parts in the thickness direction, and is sequentially divided and displayed as a first active material layer region; a second active material layer region; and a third active material layer region, the first active material layer region is brought into contact with the negative electrode current collector layer, the first active material layer region includes SiO in an amount of 10 parts by weight or less based on 100 parts by weight of the negative electrode active material, and the third active material layer region includes SiO in an amount of 80 parts by weight or more based on 100 parts by weight of the negative electrode active material.

In an exemplary embodiment of the present application, the weight ratio of Si:SiO in the first active material layer region may be 95:5 to 100:0, preferably 97.5:2.5 to 100:0.

In an exemplary embodiment of the present application, the weight ratio of Si:SiO in the third active material layer region may be 5:95 to 0:100, preferably 2.5:97.5 to 0:100.

In an exemplary embodiment of the present application, the division of the negative electrode active material layer into three equal parts in the thickness direction is a virtual division of the total thickness of the negative electrode active material layer into three equal parts based on the thickness direction of the negative electrode active material layer, and the division into equal parts may mean that all the divided regions are equally divided, but may include some errors.

In an exemplary embodiment of the present application, the fact that the negative electrode active material layer is sequentially divided and displayed as the first active material layer region; the second active material layer region; and the third active material layer region may mean that the negative electrode active material layer is divided and displayed as sequentially stacked regions including the first active material layer region based on the negative electrode current collector layer.

In an exemplary embodiment of the present application, the first active material layer region in the negative electrode active material layer is a region which is brought into contact with the negative electrode current collector layer.

In an exemplary embodiment of the present application, SiO may be included in an amount of 10 parts by weight or less based on 100 parts by weight of the negative electrode active material included in the first active material layer region in the negative electrode active material layer.

In another exemplary embodiment, Si may be included in an amount of 10 parts by weight or less, preferably 8 parts by weight or less, and more preferably 5 parts by weight or less, and may be included in an amount of 1 part by weight or more, based on 100 parts by weight of the negative electrode active material included in the first active material layer region in the negative electrode active material layer.

In still another exemplary embodiment, Si may be included in an amount of 90 parts by weight or more, preferably 92 parts by weight or more, and more preferably 95 parts by weight or more, and may be included in an amount of 99 parts by weight or less, based on 100 parts by weight of the negative electrode active material included in the first active material layer region in the negative electrode active material layer.

The negative electrode of the present application forms a concentration gradient of the active material in a single-layered negative electrode active material layer rather than using the negative electrode active material layer as two layers, and has a feature in which a desorption phenomenon from the negative electrode current collector layer can be prevented by including SiO having a small volume expansion due to charging and discharging in the above range in the first active material layer region in which the negative electrode current collector layer and the negative electrode active material layer are brought into contact with each other. That is, it is possible to have an effect of enhancing the adhesive force with the current collector layer compared to the case where the negative electrode active material layer is divided into two layers and used.

In an exemplary embodiment of the present application, the second active material layer region in the negative electrode active material layer may mean a region present between the first active material layer region and the third active material layer region.

In an exemplary embodiment of the present application, SiO may be included in an amount of 30 parts by weight or more based on 100 parts by weight of the negative electrode active material included in the second active material layer region in the negative electrode active material layer.

In another exemplary embodiment, SiO may be included in an amount of 30 parts by weight or more, preferably 40 parts by weight or more, and may be included in an amount of 50 parts by weight or less, based on 100 parts by weight of the negative electrode active material included in the second active material layer region in the negative electrode active material layer.

In an exemplary embodiment of the present application, the second active material layer is an interface region in which a first negative electrode composition and a second negative electrode composition are mixed by the wet on wet method among preparation methods to be described below, and has a feature capable of solving the reaction heterogeneity in the depth direction of the negative electrode in spite of repetition of the cycle of the battery as the SiO is included in the above content part.

In an exemplary embodiment of the present application, the third active material layer region in the negative electrode active material layer is a region in a direction farthest from the negative electrode current collector layer, and may mean a region of the upper portion of the second active material layer in the negative electrode active material layer.

In an exemplary embodiment of the present application, provided is a negative electrode for a lithium secondary battery, in which SiO is included in an amount of 80 parts by weight or more based on 100 parts by weight of the negative electrode active material included in the third active material layer region in the negative electrode active material layer.

In another exemplary embodiment, SiO may be included in an amount of 80 parts by weight or more, preferably 85 parts by weight or more, and more preferably 90 parts by weight or more, and may be included in an amount of 95 parts by weight or less, based on 100 parts by weight of the negative electrode active material included in the third active material layer region in the negative electrode active material layer.

In still another exemplary embodiment, Si may be included in an amount of 20 parts by weight or less, preferably 15 parts by weight or less, and more preferably 10 parts by weight or less, and may be included in an amount of 5 parts by weight or more, based on 100 parts by weight of the negative electrode active material included in the third active material layer region in the negative electrode active material layer.

The negative electrode has a feature capable of solving the reaction heterogeneity in the depth direction of the negative electrode in spite of repetition of the cycle of the battery by allowing SiO having better reaction durability than Si to be distributed in the above content part on the uppermost surface of the third active material layer region as described above, and additionally has a feature in which durability is excellent compared to the case where Si is provided because SiO is provided in a large amount on the surface of the negative electrode during pre-lithiation in the use of a silicon-based negative electrode.

That is, in the case of the negative electrode for a lithium secondary battery according to an exemplary embodiment of the present application, the active material included in the entire negative electrode active material layer includes Si and SiO, and a main object of the present invention is to simultaneously solve a problem in that the service life characteristics are not good when Si is included in a large amount by a concentration gradient of SiO while it is possible to maximize the efficiency of the negative electrode because the proportion of Si is high.

In one embodiment, each layer or layer region of the negative electrode active material layer may have a substantially flat surface. The outermost layer of the negative electrode active material layer included therein has a substantially flat surface. The surface of the negative electrode active material layer is continuous and/or uniform over the entire surface area of the negative electrode or uniformly covers a significant portion of the negative electrode current collector layer. The outermost surface layer of the negative electrode may include a surface region of the negative electrode active material layer and/or a third active material layer region of the negative electrode active material layer.

As shown in the SEM image of FIG. 6, the negative electrode active material layer (coated on both surfaces of the negative electrode current collector layer in FIG. 6) has a substantially flat surface and uniformly covers a significant portion of the negative electrode. In FIG. 6, the central portion (white) represents the negative electrode current collector layer, and negative electrode active material layers are formed on both sides.

In an exemplary embodiment of the present application, provided is a negative electrode for a lithium secondary battery, in which the SiO has a D50 of 1 µm or more and 10 µm or less, and has a Si crystal grain size of 100 nm or less.

Meanwhile, the negative electrode active material of the present invention may have an average particle diameter (D50) of 5 µm to 10 µm, specifically 5.5 µm to 8 µm, and more specifically 6 µm to 7 µm. When the average particle diameter is included in the above range, the viscosity of a negative electrode slurry is formed in a suitable range because the specific surface area of the particle is included in a suitable range. Accordingly, the dispersion of the particles constituting the negative electrode slurry is facilitated. Furthermore, the size of a silicon-based active material has a value equal to or more than the above lower limit value, and since a composite composed of a conductive material and a binder in the negative electrode slurry makes a contact area between silicon particles and conductive materials excellent, the possibility that the conductive network lasts is increased, so that the capacity retention rate is increased. Meanwhile, when the average particle diameter satisfied the above range, excessively large silicon particles are eliminated to form a smooth surface of the negative electrode, and accordingly, it is possible to prevent the heterogeneous phenomenon of the current density during charging and discharging.

In an exemplary embodiment of the present application, the Si generally has a characteristic BET specific surface area. The BET specific surface area of Si is preferably 0.01 to 150.0 m²/g, more preferably 0.1 to 100.0 m²/g, particularly preferably 0.2 to 80.0 m²/g, and most preferably 0.2 to 18.0 m²/g. The BET specific surface area is measured by DIN 66131 (using nitrogen).

In an exemplary embodiment of the present application, Si may be present, for example, in a crystalline or amorphous form, and preferably is not porous. Si is preferably a spherical or fragment-shaped particle. Alternatively but less preferably, Si may also have a fibrous structure or be present in the form of a film or coating including silicon.

In an exemplary embodiment of the present application, the description on Si may be applied, except that the SiO is in a state in which the Si is oxidized, and the SiO may have an average particle diameter (D50) of 1 µm to 10 µm, specifically 5.5 µm to 8 µm, and more specifically 6 µm to 7 µm.

The Si crystal grain size of the SiO may satisfy 100 nm or less, preferably 90 nm or less, and more preferably 80 nm or less, and may be 10 nm or more.

In an exemplary embodiment of the present application, the negative electrode active material includes Si and SiO, and may specifically include only the two types.

In an exemplary embodiment of the present application, the negative electrode active material may be present in an amount of 60 parts by weight or more based on 100 parts by weight of the negative electrode composition.

In another exemplary embodiment, the negative electrode active material may be included in an amount of 60 parts by weight or more, preferably 65 parts by weight or more, and more preferably 70 parts by weight or more, and may be included in an amount of 95 parts by weight or less, preferably 90 parts by weight or less, and more preferably 80 parts by weight or less, based on 100 parts by weight of the negative electrode composition.

The negative electrode composition according to the present application has a feature in which by using a specific conductive material and a specific binder, which can suppress the volume expansion rate in the charging and discharging process even though a silicon-based active material having a remarkably high capacity is used in the above range, the performance of the negative electrode does not deteriorate and output characteristics at charging and discharging are excellent even though the above range is included.

In an exemplary embodiment of the present application, the Si and SiO may have a non- circularity form, and the circularity thereof is, for example, 0.9 or less, for example, 0.7 to 0.9, for example, 0.8 to 0.9, and for example, 0.85 to 0.9.

In the present application, the circularity is determined by the following Equation 1, where A is the area and P is the boundary line. [Equation 1] $4 πA / {P}^{2}$

In the related art, it was common to use only a graphite-based compound as a negative electrode active material, but recently, as the demand for a high-capacity battery has increased, attempts to mix and use a silicon-based compound have been increased in order to increase the capacity. However, in the case of the silicon-based compound, there is a limitation that the volume rapidly expands in the process of charging/discharging to impair the conductive path formed in the negative electrode active material layer, consequently resulting in deterioration in the performance of the battery, so that the type of negative electrode conductive material used together with the silicon-based active material is important.

In an exemplary embodiment of the present application, the negative electrode conductive material may include one or more selected from the group consisting of a dotted conductive material; a planar conductive material; and a linear conductive material.

In an exemplary embodiment of the present application, the dotted conductive material may be used to enhance the conductivity of the negative electrode, and means a conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 m²/g or more and 70 m²/g or less, preferably 45 m²/g or more and 65 m²/g or less, and more preferably 50 m²/g or more and 60 m²/g or less.

In an exemplary embodiment of the present application, the dotted conductive material may have a particle diameter of 10 nm to 100 nm, preferably 20 nm to 90 nm, and more preferably 40 nm to 60 nm.

In an exemplary embodiment of the present application, the negative electrode conductive material may include a planar conductive material.

The planar conductive material may increase the surface contact between silicon particles in the negative electrode to improve conductivity and simultaneously suppress the disconnection of the conductive path due to the volume expansion, and is used as a concept including a bulk conductive material or plate-like conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 µm to 7 µm, specifically 3 µm to 6 µm, and more specifically 4 µm to 5 µm. When the average particle diameter satisfied the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, the planar conductive material provides a negative electrode composition having a D10 of 0.5 µm or more and 1.5 µm or less, a D50 of 2.5 µm or more and 3.5 µm or less, and a D90 of 7.0 µm or more and 15.0 µm or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 5 m²/g or more.

In another exemplary embodiment, the planar conductive material may have a BET specific surface area of 5 m²/g or more and 500 m²/g or less, preferably 5 m²/g or more and 300 m²/g or less, and more preferably 5 m²/g or more and 200m²/g or less.

In still another exemplary embodiment, the planar conductive material is a high specific surface area planar conductive material, and the BET specific surface area may satisfy a range of 50 m²/g or more and 500 m²/g or less, preferably 80 m²/g or more and 300 m²/g or less, and more preferably 100 m²/g or more and 300 m²/g or less.

In yet another exemplary embodiment, the planar conductive material is a low specific surface area planar conductive material, and the BET specific surface may satisfy a range of 5 m²/g or more and 40 m²/g or less, preferably 5 m²/g or more and 30 m²/g or less, and more preferably 5 m²/g or more and 25 m²/g or less.

As other negative electrode conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein, unless otherwise specified, refers to a secondary shape in the form of a bundle or rope in which the plurality of carbon nanotube units is aligned side by side or intertwined in substantially the same orientation as a longitudinal axis of the carbon nanotube unit. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present application, the linear conductive material may be SWCNT.

In an exemplary embodiment of the present application, provided is a negative electrode for a lithium secondary battery, in which the negative electrode conductive material includes: a planar conductive material; and a linear conductive material.

In the present invention, by including linear and planar conductive materials as a negative electrode conductive material without using the dotted conductive material as described above, the conductive path may be secured and output characteristics may be enhanced in the secondary battery of the present invention.

In an exemplary embodiment of the present application, provided is a negative electrode composition, in which the negative electrode conductive material is included in an amount of 10 parts by weight or more and 40 parts by weight or less, based on 100 parts by weight of the negative electrode composition.

In another exemplary embodiment, the negative electrode conductive material may be included in an amount of 10 parts by weight or more and 40 parts by weight or less, preferably 10 parts by weight or more and 30 parts by weight or less, and more preferably 15 parts by weight or more and 25 parts by weight or less, based on 100 parts by weight of the negative electrode composition.

In an exemplary embodiment of the present application, provided is a negative electrode for a lithium secondary battery, in which the planar conductive material and the linear conductive material are included in an amount of 90 parts by weight or more and 99.9 parts by weight or less; and 0.1 parts by weight or more and 10 parts by weight or less, respectively, based on 100 parts by weight of the negative electrode conductive material.

In another exemplary embodiment, the planar conductive material may be included in an amount of 90 parts by weight or more and 99.9 parts by weight or less, preferably 93 parts by weight or more and 99.9 parts by weight or less, and more preferably 95 parts by weight or more and 99.9 parts by weight or less, based on 100 parts by weight of the negative electrode conductive material.

In still another exemplary embodiment, the linear conductive material may be included in an amount of 0.1 parts by weight or more and 10 parts by weight or less, preferably 0.1 parts by weight or more and 7 parts by weight or less, and more preferably 0.1 parts by weight or more and 5 parts by weight or less, based on 100 parts by weight of the negative electrode conductive material.

In an exemplary embodiment of the present application, the negative electrode conductive material includes a linear conductive material and a planar conductive material, and the ratio of the linear conductive material:the planar conductive material may satisfy 0.01:1 to 0.1:1.

In an exemplary embodiment of the present application, the ratio of the linear conductive material:the planar conductive material may satisfy 0.1:1.

In an exemplary embodiment of the present application, provided is a negative electrode for a lithium secondary battery, in which the negative electrode active material layer has a concentration gradient where the content of the planar conductive material is increased in a direction from a surface facing the negative electrode current collector layer to a surface opposite to the surface facing the negative electrode current collector layer.

In an exemplary embodiment of the present application, the negative electrode conductive material includes a linear conductive material and a planar conductive material and satisfies the composition and the ratio, respectively, and furthermore, as the content of the planar conductive material is decreased in a direction away from the negative electrode current collector layer as described above, the negative electrode for a lithium secondary battery according to the present invention has a feature in which output characteristics at high C-rate are excellent because service life characteristics of the existing lithium secondary battery are not greatly affected and the number of points where the battery can be charged and discharged is increased, and has a feature in which the thickness of SiO on the surface of the negative electrode active material layer can be secured a little thicker.

The negative electrode conductive material according to the present application has a completely different configuration from a conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when rolled, and the configuration and role thereof are completely different from those of the negative electrode conductive material of the present invention.

The negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present application, the planar conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the planar conductive material is a material included to maintain the conductive path in the negative electrode active material layer, and means a material for securing a conductive path in the form of a surface in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

That is, in an exemplary embodiment of the present application, the BET specific surface area of artificial graphite or natural graphite, which is a carbon-based active material may satisfy a range of 0.1 m²/g or more and 4.5 m²/g or less. In addition, plate-like graphite, which is a planar conductive material, is in a planar form, and may have a BET specific surface area of 5 m²/g or more.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various polymers thereof.

The binder according to an exemplary embodiment of the present application plays a role of supporting the negative electrode active material and the negative electrode conductive material in order to prevent the distortion and structural deformation of the negative electrode structure in the volume expansion and relaxation of the silicon-based active material, and when the above role is satisfied, all general negative electrode binders can be applied, specifically, a water-based binder can be used, and more specifically, a PAM-based binder can be used.

In an exemplary embodiment of the present application, the negative electrode binder may be included in an amount of 30 parts by weight or less, preferably 25 parts by weight or less, and more preferably 20 parts by weight or less, and may be included in an amount of 5 parts by weight or more and 10 parts by weight or more, based on 100 parts by weight of the negative electrode composition.

When a Si-based material is used in the negative electrode compared to the existing carbon-based negative electrode, a water-based binder is applied by the aforementioned parts by weight, so that a dotted conductive material having a low functional group content can be used, and depending on the feature, the dotted conductive material has hydrophobicity to have a feature in which the bonding strength with the conductive material/binder becomes excellent.

In another exemplary embodiment, provided is a method for preparing a negative electrode for a lithium secondary battery, the method including: applying a first negative electrode composition including: a negative electrode active material including Si and SiO; a negative electrode conductive material; and a negative electrode binder onto a negative electrode current collector layer; and forming a negative electrode active material layer by applying a second negative electrode composition including SiO onto the first negative electrode composition, in which the Si is included in an amount of 60 parts by weight or more based on 100 parts by weight of the negative electrode active material included in the first negative electrode composition, a weight ratio of Si:SiO of the negative electrode active material layer is 65:35 to 85:15, and the negative electrode active material layer has a higher content of SiO on a surface opposite to a surface facing the negative electrode current collector layer than a content of SiO on a surface facing the negative electrode current collector layer.

In the method for preparing the negative electrode, each composition contained in the negative electrode may be the same as described above.

In an exemplary embodiment of the present application, the applying of the first negative electrode composition including: the negative electrode active material including Si and SiO; the negative electrode conductive material; and the negative electrode binder onto the negative electrode current collector layer may include applying a first negative electrode slurry by including a solvent for forming a negative electrode slurry in the first negative electrode composition.

In an exemplary embodiment of the present application, the applying of the second negative electrode composition including SiO onto the first negative electrode composition may include applying a second negative electrode slurry by including a solvent for forming a negative electrode slurry in the second negative electrode composition.

In an exemplary embodiment of the present application, the loading amount of the first negative electrode slurry may satisfy a range of two-fold or more of the loading amount of the second negative electrode slurry.

In this case, the negative electrode active material layer according to the present application can form the weight ratio of Si:SiO as 65:35 to 85:15 by adjusting the loading amount of the first negative electrode slurry and the loading amount of the second negative electrode slurry.

In an exemplary embodiment of the present application, a negative electrode slurry may be prepared by including a solvent for forming a negative electrode slurry in the first negative electrode composition and the second negative electrode composition. In this case, the solid content of the negative electrode slurry may satisfy a range of 10% or more and 40% or less.

In an exemplary embodiment of the present application, the solid content of the first negative electrode slurry may be formed lower than the solid content of the second negative electrode slurry.

In an exemplary embodiment of the present application, provided is a method for preparing a negative electrode for a lithium secondary battery, in which the applying of the second negative electrode composition including SiO onto the first negative electrode composition includes a wet on wet process.

The wet on wet method is a form in which the next paint is applied and spread before a first applied paint is dried, and may mean a process different from wet on dry and dry on dry.

In an exemplary embodiment of the present application, the applying of the second negative electrode composition including SiO onto the first negative electrode composition has a feature in which the negative electrode active material layer according to the present application may have a specific concentration gradient by a wet on wet process.

In an exemplary embodiment of the present application, in the forming of the negative electrode active material layer by applying the second negative electrode composition including SiO onto the first negative electrode composition, the negative electrode active material layer may be formed by mixing the interface between the applied first negative electrode composition and the applied second negative electrode composition. In this case, the mixing of the interface may be expressed as inter-mixing.

In an exemplary embodiment of the present application, provided is a method for preparing a negative electrode for a lithium secondary battery, in which the viscosity of the first negative electrode composition is lower than that of the second negative electrode composition.

For the inter-mixing to occur at the interface between the first negative electrode composition and the second negative electrode composition, the viscosity range may be adjusted as described above, and accordingly, it is possible to have the above-described concentration gradient.

In an exemplary embodiment of the present application, provided is a lithium secondary battery including: a positive electrode; the negative electrode for a lithium secondary battery according to the present application; a separator provided between the positive electrode and the negative electrode; and an electrolyte.

FIG. 5 is a view illustrating the stacking structure of a lithium secondary battery according to an exemplary embodiment of the present application. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector layer and a positive electrode active material layer formed on the positive electrode current collector layer and including the positive electrode active material.

In the positive electrode, the positive electrode current collector layer is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector layer may typically have a thickness of 3 to 500 µm, and the adhesion of the positive electrode active material may also be enhanced by forming fine convex and concave irregularities on the surface of the current collector. For example, the positive electrode current collector may be used in various forms such as a film, a sheet, a foil, a net, a porous body, a foam, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as Chemical Formula Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

The positive electrode binder serves to improve the bonding between positive electrode active material particles and the adhesion between the positive electrode active material and the positive electrode current collector layer. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a lithium salt.

As the non-aqueous organic solvent, it is possible to use, for example, a non-quantum organic solvent, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, thus such a combined use is more preferable.

As the metal salt, a lithium salt may be used, the lithium salt is a material which is easily dissolved in the non-aqueous electrolyte, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻ (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

### [Mode for invention]

Hereinafter, preferred embodiments will be suggested to facilitate understanding of the present invention, but the embodiments are only provided to illustrate the present invention

### <Examples>

### Example 1: Preparation of negative electrode

### Preparation of first negative electrode slurry

A first negative electrode composition was formed using Si (average particle diameter (D50): 3.5 µm) as a silicon-based active material, a first conductive material, a second conductive material, and polyacrylamide as a binder at a weight ratio of 80:9.6:0.4:10, and added to distilled water as a solvent for forming a negative electrode slurry to prepare a first negative electrode slurry.

The first conductive material was plate-like graphite (specific surface area: 17 m²/g, average particle diameter (D50): 3.5 µm), and the second conductive material was SWCNT.

After the first conductive material, the second conductive material, the binder and water were dispersed at 2500 rpm for 30 minutes using a homo mixer as a mixing method, an active material was added thereto, and then the resulting mixture was dispersed at 2500 rpm for 30 minutes to prepare a slurry.

### Preparation of second negative electrode slurry

A second negative electrode slurry was prepared in the same manner as in the preparation of the first negative electrode slurry, except that SiO (D50: 6 µm) as the silicon-based active material, the first conductive material, the second conductive material and polyacrylamide as the binder were used at a weight ratio of 65:19.5:0.5:15.

Thereafter, both surfaces of a copper current collector (thickness: 8 µm) as a negative electrode current collector were coated with the first negative electrode slurry at a loading amount of 94 mg/25 cm², and simultaneously, the second negative electrode slurry was coated thereon at a loading amount of 38 mg/25 cm² by the wet on wet method and dried. In this case, the solid content of the first negative electrode slurry was 25%, and the solid content of the second negative electrode slurry was 28%.

As the above solid contents were satisfied, intermixing occurred in the drying process, so that there was a process in which the two active material layers are mixed.

Thereafter, the resulting coated current collector was roll pressed and dried at 130°C in a vacuum oven for 10 hours, thereby forming a negative electrode active material layer (thickness: 65 µm), which was used as a negative electrode.

The ratios of the negative electrode active materials in the negative electrode active material layer, the surface region, and the junction region showed a ratio of Si:SiO=75:25, a ratio of Si:SiO=3:97, and a ratio of Si:SiO=97:3, respectively.

### (Thickness of the negative electrode: 73 µm, porosity of the negative electrode: 40%)

### Example 2: Preparation of negative electrode

### Preparation of first negative electrode slurry

A first negative electrode composition was formed using Si (average particle diameter (D50): 3.5 µm) as a silicon-based active material, SWCNT as a conductive material, and polyacrylamide as a binder at a weight ratio of 89.5:0.5:10, and added to distilled water as a solvent for forming a negative electrode slurry to prepare a first negative electrode slurry.

After the SWCNT, the binder and water were dispersed at 2500 rpm for 30 minutes using a homo mixer as a mixing method, an active material was added thereto, and then the resulting mixture was dispersed at 2500 rpm for 30 minutes to prepare a first negative electrode slurry.

### Preparation of second negative electrode composition

A second negative electrode slurry was prepared in the same manner as in the preparation of the first negative electrode slurry, except that SiO (D50: 6 µm) as the silicon-based active material, SWCNT as the conductive material, and polyacrylamide as the binder were used at a weight ratio of 84.5:0.5:15.

Thereafter, both surfaces of a copper current collector (thickness: 8 µm) as a negative electrode current collector were coated with the first negative electrode slurry at a loading amount of 94 mg/25 cm², and simultaneously, the second negative electrode slurry was coated thereon at a loading amount of 38 mg/25 cm² by the wet on wet method and dried. In this case, the solid content of the first negative electrode slurry was 25%, and the solid content of the second negative electrode slurry was 28%.

As the above solid contents were satisfied, intermixing occurred in the drying process, so that there was a process in which the two active material layers are mixed.

Thereafter, the resulting coated current collector was roll pressed and dried at 130°C in a vacuum oven for 10 hours, thereby forming a negative electrode active material layer (thickness: 65 µm), which was used as a negative electrode.

The ratios of the negative electrode active materials in the negative electrode active material layer, the surface region, and the junction region showed a ratio of Si:SiO=75:25, a ratio of Si:SiO=3:97, and a ratio of Si:SiO=97:3, respectively.

### Example 3: Preparation of negative electrode

### Preparation of first negative electrode slurry

A first negative electrode composition was formed using Si (average particle diameter (D50): 3.5 µm) as a silicon-based active material, a first conductive material (dotted conductive material, D50 = 50 nm), a second conductive material (SWCNT), a third conductive material (planar conductive material, D50 = 3.5 µm) and polyacrylamide as a binder at a weight ratio of 70:9.6:0.4:10:10, and added to distilled water as a solvent for forming a negative electrode slurry to prepare a first negative electrode slurry.

After the three conductive materials, the binder and water were dispersed at 2500 rpm for 30 minutes using a homo mixer as a mixing method, an active material was added thereto, and then the resulting mixture was dispersed at 2500 rpm for 30 minutes to prepare a slurry.

### Preparation of second negative electrode slurry

A second negative electrode slurry was prepared in the same manner as in the preparation of the first negative electrode slurry, except that SiO (D50: 6 µm) as the silicon-based active material, the first conductive material (dotted conductive material D50 = 50 nm), the second conductive material (SWCNT), the third conductive material (planar conductive material, D50 = 3.5 µm) and polyacrylamide as the binder were used at a weight ratio of 60:9.5:0.5:10:15.

Thereafter, both surfaces of a copper current collector (thickness: 8 µm) as a negative electrode current collector were coated with the first negative electrode slurry at a loading amount of 94 mg/25 cm², and simultaneously, the second negative electrode slurry was coated thereon at a loading amount of 38 mg/25 cm² by the wet on wet method and dried. In this case, the solid content of the first negative electrode slurry was 25%, and the solid content of the second negative electrode slurry was 28%.

As the above solid contents were satisfied, intermixing occurred in the drying process, so that there was a process in which the two active material layers are mixed. Thereafter, the resulting coated current collector was roll pressed and dried at 130°C in a vacuum oven for 10 hours, thereby forming a negative electrode active material layer (thickness: 65 µm), which was used as a negative electrode.

The ratios of the negative electrode active materials in the negative electrode active material layer, the surface region, and the junction region showed a ratio of Si:SiO=75:25, a ratio of Si:SiO=3:97, and a ratio of Si:SiO=97:3, respectively.

### Example 4: Preparation of negative electrode

A negative electrode was formed in the same manner as in Example 1, except that both surfaces of the copper current collector were coated with the first negative electrode slurry at a loading amount of 85 mg/25 cm², and simultaneously, the second negative electrode slurry was coated thereon at a loading amount of 43 mg/25 cm² by the wet on wet method and dried in Example 1. In this case, the ratio of the negative electrode active materials in the negative electrode active material layer showed a ratio of Si:SiO=65:35.

The ratios of the negative electrode active materials in the surface region and the junction region showed a ratio of Si:SiO=5:95 and a ratio of Si:SiO=95:5.

### (Thickness of the negative electrode: 73 µm, porosity of the negative electrode: 40%)

### Example 5: Preparation of negative electrode

A negative electrode was formed in the same manner as in Example 1, except that both surfaces of the copper current collector were coated with the first negative electrode slurry at a loading amount of 102mg/25 cm², and simultaneously, the second negative electrode slurry was coated thereon at a loading amount of 31 mg/25 cm² by the wet on wet method and dried in Example 1. In this case, the ratio of the negative electrode active materials in the negative electrode active material layer showed a ratio of Si:SiO=85:15.

The ratios of the negative electrode active materials in the surface region and the junction region showed a ratio of Si:SiO=1:99 and a ratio of Si:SiO=99:1.

### (Thickness of the negative electrode: 73 µm, porosity of the negative electrode: 40%)

### Comparative Example 1: Preparation of negative electrode

Both surfaces of a copper current collector (thickness: 8 µm) as a negative electrode current collector were coated with the first negative electrode slurry prepared in Example 1 and the first negative electrode slurry was dried, thereby forming a negative electrode active material layer and manufacturing a negative electrode.

### Comparative Example 2: Preparation of negative electrode

Both surfaces of a copper current collector (thickness: 8 µm) as a negative electrode current collector were coated with the second negative electrode slurry prepared in Example 1 and the second negative electrode slurry was dried, thereby forming a negative electrode active material layer and manufacturing a negative electrode.

### Comparative Example 3: Preparation of negative electrode

A negative electrode was manufactured by forming a negative electrode active material layer in the same manner as in Example 1, except that both surfaces of the copper current collector (thickness: 8 µm) as the negative electrode current collector were coated with the second negative electrode slurry prepared in Example 1 at a loading amount of 38 mg/25 cm², and simultaneously, the first negative electrode slurry prepared in Example 1 was coated thereon at a loading amount of 94 mg/25 cm² by the wet on wet method and dried.

The ratios of the negative electrode active materials in the negative electrode active material layer, the surface region, and the junction region showed a ratio of Si:SiO=75:25, a ratio of Si:SiO=95:5, and a ratio of Si:SiO=5:95, respectively.

### Comparative Example 4: Preparation of negative electrode

A negative electrode was manufactured by forming a negative electrode active material layer in the same manner as in Example 1, except that both surfaces of the copper current collector (thickness: 8 µm) as the negative electrode current collector were coated with the first negative electrode slurry prepared in Example 1 at a loading amount of 63 mg/25 cm², and simultaneously, the first negative electrode slurry prepared in Example 1 was coated thereon at a loading amount of 77 mg/25 cm² by the wet on wet method and dried.

The ratio of the negative electrode active materials in the negative electrode active material layer showed a ratio of Si:SiO=50:50.

### Comparative Example 5: Preparation of negative electrode

A negative electrode was manufactured by forming a negative electrode active material layer in the same manner as in Example 1, except that both surfaces of the copper current collector (thickness: 8 µm) as the negative electrode current collector were coated with the first negative electrode slurry prepared in Example 1 at a loading amount of 120mg/25 cm², and simultaneously, the first negative electrode slurry prepared in Example 1 was coated thereon at a loading amount of 22 mg/25 cm² by the wet on wet method and dried.

The ratio of the negative electrode active materials in the negative electrode active material layer showed a ratio of Si:SiO=90:10.

For the negative electrodes of Examples 1 to 5 and Comparative Examples 1 to 5, cell energy density, initial capacity (based on 4.2 to 3.0 V), service life performance (@300 cycle), and 2.5 C discharge resistance increase @SOC50 (after 300 cycle) were each measured as in the following Table 1, and the results are shown in the following Table 1.

**[Table 1]**

| | Example 1 | Example 2 | Example 3 | Example 4 | Example 5 | Comparative Example 1 | Comparative Example 2 | Comparative Example 3 | Comparative Example 4 | Comparative Example 5 |
|---|---|---|---|---|---|---|---|---|---|---|
| Cell energy density | 870 Wh/L | 910 Wh/L | 850 Wh/L | 820 Wh/L | 962 Wh/L | 950 Wh/L | 480 Wh/L | 870 Wh/L | 780 Wh/L | 976 W/L |
| Initial capacity (based on 4.2 to 3.0 V) | 121 mAh | 122 mAh | 121 mAh | 120 mAh | 125 mAh | 123 mAh | 120 mAh | 113 mAh | 118 mAh | 127 mAh |
| Service life perfor mance (@300 cycle) | 85% | 83% | 84% | 89% | 83% | 78% | 92% | 75% | 80% | 79% |
| 2.5 C discharge resis tance increase @SOC50 (after 300 cycle) | 68% | 70% | 72% | 69% | 73% | 74% | 63% | 76% | 73% | 79% |

As can be confirmed in Table 1, in the case of the negative electrodes for a lithium secondary battery according to Examples 1 to 5, the capacity of the negative electrode may be maximized by including Si and SiO as negative electrode active materials in a specific content. Further, the negative electrode active material layer is formed to have a higher content of SiO on the surface opposite to the surface facing the negative electrode current collector layer than a content of SiO on the surface facing the negative electrode current collector layer.

Accordingly, it could be confirmed by the service life performance and resistance increase rate in Table 1 that the negative electrode has a feature capable of solving the reaction heterogeneity in the depth direction of the negative electrode in spite of repetition of the cycle of the battery by allowing a large amount of SiO having better reaction durability than Si to be distributed on the uppermost surface of the negative electrode.

In the case of Comparative Example 1, 100% of Si as the negative electrode active material was applied, and the cell energy density was formed to be high and the initial capacity was high, but it could be confirmed that according to the charging and discharging, the service life performance deteriorated as the reaction on the surface portion of the Si active material layer is concentrated, and the discharge resistance increase was also high.

In the case of Comparative Example 2, 100% of SiO as the negative electrode active material was applied, and the service life performance itself was excellent because the degree of expansion of the SiO active material is less than that of Si, but it could be confirmed that the performance of the negative electrode was not better than that in Example 1 because the cell energy density was reduced.

Comparative Example 3 is a case where the proportion of Si on the surface (surface region) of the negative electrode active material layer is high unlike Example 1, and the cell energy density was at an equivalent level, but SiO, which is less reactive with Li than Si did not participate in the actual reaction because the SiO was disposed on the side of the negative electrode current collector, and it could be confirmed that the durability due to a heterogeneous reaction deteriorated because an effect of increasing the depth of use of Si rather appeared. Similarly, during pre-lithiation, a large amount of Si is provided on the surface of the negative electrode, resulting in rapid degradation of the surface compared to the case where SiO is provided on the surface of the negative electrode, so that the service life durability can be expected to deteriorate.

In the case of Comparative Example 4, Si:SiO=50:50 as the negative electrode active material was applied, and the service life performance was relatively excellent because SiO was included in a larger content than in Example 1, but it could be confirmed that the performance of the negative electrode was not better than that in Example 1 because the cell energy density was reduced.

In the case of Comparative Example 5, Si:SiO=90:10 as the negative electrode active material was applied, and the energy density and capacity characteristics could be excellent because Si was included in a larger content than in Example 1, but it could be confirmed that when the charging and discharging cycle of the battery was repeated, the service life performance deteriorated and the resistance increase rate was high because the reaction heterogeneity in the depth direction of the negative electrode active material layer was increased.

When Examples 1 to 3 are compared, in the case of Example 1, two types of linear conductive material and planar conductive material were included, and it could be confirmed that the initial capacity exhibited a level equivalent to those of the case of Examples 2 and 3 where one type of conductive material was included or in which three types of conductive materials were included, but the service life performance was excellent, and in particular, the discharge resistance-related effect was excellent. This is because the negative electrode for a lithium secondary battery according to the present invention does not significantly affect the service life characteristics of an existing lithium secondary battery, has many points where the battery can be charged and discharged, and thus has excellent output characteristics at high C-rate.

With reference to the Examples and Comparative Examples and the present specification, it can be seen that in the negative electrode for a lithium secondary battery according to an exemplary embodiment of the present invention, the ratio of Si:Sio included in the negative electrode active material satisfies 65:35 to 85:15. That is, it could be confirmed that Si and SiO were included at the aforementioned weight ratio in order to maximize the capacity characteristics while using a single-layered negative electrode active material layer, and further, the capacity and service life characteristics of a lithium secondary battery including the negative electrode were enhanced by minimizing the content part of Si on the surface portion of the negative electrode active material layer to enhance the durability of the electrode through a concentration gradient of SiO in the negative electrode active material layer with a respect to a problem of the service life characteristics caused by the electrode surface degradation.

## Claims

1. A negative electrode for a lithium secondary battery, comprising:
a negative electrode current collector layer; and
a negative electrode active material layer provided on one surface of the negative electrode current collector layer,
wherein the negative electrode active material layer comprises a negative electrode composition comprising: a negative electrode active material; a negative electrode conductive material; and a negative electrode binder,
the negative electrode active material comprises Si and SiO,
a weight ratio of the Si:SiO is 65:35 to 85:15, and
in the negative electrode active material layer, a content of SiO on a surface opposite to the surface facing the negative electrode current collector layer is higher than a content of SiO on the surface facing the negative electrode current collector layer,
wherein the negative electrode active material layer comprises: a junction region comprising the surface facing the negative electrode current collector layer; and a surface region comprising the surface opposite to the surface facing the negative electrode current collector layer,
a weight ratio of the Si:SiO in the junction region is 95:5 to 100:0, and
a weight ratio of the Si:SiO in the surface region is 5:95 to 0:100,
with the weight ratios of Si and SiO being measured using images of a cross-section of the negative electrode active material layer to perform energy dispersive spectroscopy (EDS).

2. The negative electrode of claim 1, wherein the negative electrode active material layer has a concentration gradient where the content of SiO is increased in a direction from the surface facing the negative electrode current collector layer to the surface opposite to the surface facing the negative electrode current collector layer.

3. The negative electrode of claim 1, wherein the negative electrode active material is present in an amount of 60 parts by weight or more, based on 100 parts by weight of the negative electrode composition.

4. The negative electrode of claim 1, wherein the negative electrode conductive material comprises: a planar conductive material selected from the group of plate-like graphite, graphene, graphene oxide and graphite flake; and a linear conductive material selected from carbon nanotubes.

5. The negative electrode of claim 4, wherein the negative electrode active material layer has a concentration gradient where a content of the planar conductive material is increased in a direction from the surface facing the negative electrode current collector layer to the surface opposite to the surface facing the negative electrode current collector layer.

6. The negative electrode of claim 1, wherein the average particle diameter D50 of Si is 1 µm or more and 10 µm or less,
the average particle diameter D50 of SiO is 1 µm or more and 10 µm or less, and
the Si crystal grain size of SiO is 100 nm or less.

7. The negative electrode of claim 4, wherein the planar conductive material is comprised in an amount of 90 parts by weight or more and 99.9 parts by weight or less and the linear conductive material is comprised in amount of 0.1 part by weight or more and 10 parts by weight or less, based on 100 parts by weight of the negative electrode conductive material.

8. The negative electrode of claim 1, wherein the negative electrode active material layer is divided into three equal parts in the thickness direction, and
is sequentially divided and displayed as a first active material layer region; a second active material layer region; and the third active material layer region; and
the first active material layer region is in contact with the negative electrode current collector layer, and
the first active material layer region includes 10 parts by weight or less of SiO based on 100 parts by weight of the negative electrode active material, and
the third active material layer region includes 80 parts by weight or more of SiO based on 100 parts by weight of the negative electrode active material,
with the weight ratios of Si and SiO being measured using images of a cross-section of the negative electrode active material layer to perform energy dispersive spectroscopy (EDS).

9. The negative electrode of claim 8, wherein a weight ratio of Si:SiO in the first active material layer region is 95:5 to 100:0,
with the weight ratios of Si and SiO being measured using images of a cross-section of the negative electrode active material layer to perform energy dispersive spectroscopy (EDS).

10. The negative electrode of claim 8, wherein the weight ratio of Si:SiO in the third active material layer region is 5:95 to 0:100,
with the weight ratios of Si and SiO being measured using images of a cross-section of the negative electrode active material layer to perform energy dispersive spectroscopy (EDS).

11. A method for preparing the negative electrode of claim 1, the method comprising:
applying a first negative electrode composition comprising: a negative electrode active material comprising Si; a negative electrode conductive material; and a negative electrode binder onto a negative electrode current collector layer; and
forming a negative electrode active material layer by applying a second negative electrode composition comprising SiO onto the first negative electrode composition,
wherein the Si is comprised in an amount of 60 parts by weight or more based on 100 parts by weight of the negative electrode active material in the first negative electrode composition,
a weight ratio of Si:SiO in the negative electrode active material layer is 65:35 to 85:15, and
in the negative electrode active material layer, a SiO content on a surface opposite to the surface facing the negative electrode current collector layer is higher than a content of SiO on the surface facing the negative electrode current collector layer.

12. The method of claim 11, wherein a viscosity of the first negative electrode composition is lower than a viscosity of the second negative electrode composition.

13. The method of claim 11, wherein the step of applying the second negative electrode composition comprising SiO onto the first negative electrode composition comprises a wet on wet process.

14. A lithium secondary battery comprising:
a positive electrode;
the negative electrode for a lithium secondary battery according to any one of claims 1 to 10;
a separator provided between the positive electrode and the negative electrode; and
an electrolyte.

## Patentansprüche

1. Negativelektrode für eine Lithiumsekundärbatterie,
umfassend:
eine Negativelektroden-Stromkollektorschicht; und
eine Negativelektroden-Aktivmaterialschicht, die auf einer Oberfläche der Negativelektroden-Stromkollektorschicht vorgesehen ist,
wobei die Negativelektroden-Aktivmaterialschicht eine Negativelektrodenzusammensetzung umfasst, die umfasst: ein Negativelektroden-Aktivmaterial; ein Negativelektroden-Leitmaterial; und ein Negativelektroden-Bindemittel,
wobei das Negativelektroden-Aktivmaterial Si und SiO umfasst,
wobei ein Gewichtsverhältnis von Si:SiO 65:35 bis 85:15 beträgt, und
wobei in der Negativelektroden-Aktivmaterialschicht ein SiO-Gehalt auf der der Oberfläche, die der Negativelektroden-Stromkollektorschicht zugewandt ist, gegenüberliegenden Oberfläche höher ist als ein SiO-Gehalt auf der Oberfläche, die der Negativelektroden-Stromkollektorschicht zugewandt ist,
wobei die Negativelektroden-Aktivmaterialschicht umfasst: einen Verbindungsbereich, der die Oberfläche umfasst, die der Negativelektroden-Stromkollektorschicht zugewandt ist; und einen Oberflächenbereich, der die der Oberfläche, die der Negativelektroden-Stromkollektorschicht zugewandt ist, gegenüberliegende Oberfläche umfasst,
wobei ein Gewichtsverhältnis von Si:SiO im Verbindungsbereich 95:5 bis 100:0 beträgt, und
wobei ein Gewichtsverhältnis von Si:SiO im Oberflächenbereich 5:95 bis 0:100 beträgt,
wobei die Gewichtsverhältnisse von Si und SiO unter Verwendung von Bildern eines Querschnitts der Negativelektroden-Aktivmaterialschicht zum Durchführen einer energiedispersiven Spektroskopie (EDS) gemessen werden.

2. Negativelektrode nach Anspruch 1, wobei die Negativelektroden-Aktivmaterialschicht einen Konzentrationsgradienten aufweist, bei dem der SiO-Gehalt in einer Richtung von der Oberfläche, die der Negativelektroden-Stromkollektorschicht zugewandt ist, zu der der Oberfläche, die der Negativelektroden-Stromkollektorschicht zugewandt ist, gegenüberliegenden Oberfläche erhöht ist.

3. Negativelektrode nach Anspruch 1, wobei das Negativelektroden-Aktivmaterial in einer Menge von 60 Gewichtsteilen oder mehr, bezogen auf 100 Gewichtsteile der Negativelektrodenzusammensetzung, vorhanden ist.

4. Negativelektrode nach Anspruch 1, wobei das Negativelektroden-Leitmaterial umfasst: ein planares Leitmaterial, ausgewählt aus der Gruppe aus plattenförmigem Graphit, Graphen, Graphenoxid und Graphitflocken; und ein lineares Leitmaterial, ausgewählt aus Kohlenstoffnanoröhren.

5. Negativelektrode nach Anspruch 4, wobei die Negativelektroden-Aktivmaterialschicht einen Konzentrationsgradienten aufweist, bei dem ein Gehalt des planaren Leitmaterials in einer Richtung von der Oberfläche, die der Negativelektroden-Stromkollektorschicht zugewandt ist, zu der der Oberfläche, die der Negativelektroden-Stromkollektorschicht zugewandt ist, gegenüberliegenden Oberfläche erhöht ist.

6. Negativelektrode nach Anspruch 1, wobei der mittlere Partikeldurchmesser D50 von Si 1 µm oder mehr und 10 µm oder weniger beträgt,
der mittlere Partikeldurchmesser D50 von SiO 1 µm oder mehr und 10 µm oder weniger beträgt, und
die Si-Kristallkorngröße von SiO 100 nm oder weniger beträgt.

7. Negativelektrode nach Anspruch 4, wobei das planare Leitmaterial in einer Menge von 90 Gewichtsteilen oder mehr und 99,9 Gewichtsteilen oder weniger enthalten ist und das lineare Leitmaterial in einer Menge von 0,1 Gewichtsteil oder mehr und 10 Gewichtsteilen oder weniger enthalten ist, bezogen auf 100 Gewichtsteile des Negativelektroden-Leitmaterials.

8. Negativelektrode nach Anspruch 1, wobei die Negativelektroden-Aktivmaterialschicht in Dickenrichtung in drei gleiche Teile geteilt ist, und
sequentiell geteilt und dargestellt ist als ein erster Aktivmaterialschichtbereich; ein zweiter Aktivmaterialschichtbereich; und der dritte Aktivmaterialschichtbereich; und
der erste Aktivmaterialschichtbereich in Kontakt mit der Negativelektroden-Stromkollektorschicht steht, und
der erste Aktivmaterialschichtbereich 10 Gewichtsteile oder weniger SiO, bezogen auf 100 Gewichtsteile des Negativelektroden-Aktivmaterials, einschließt, und
der dritte Aktivmaterialschichtbereich 80 Gewichtsteile oder mehr SiO, bezogen auf 100 Gewichtsteile des Negativelektroden-Aktivmaterials, einschließt,
wobei die Gewichtsverhältnisse von Si und SiO unter Verwendung von Bildern eines Querschnitts der Negativelektroden-Aktivmaterialschicht durch Durchführung einer energiedispersiven Spektroskopie (EDS) gemessen werden.

9. Negativelektrode nach Anspruch 8, wobei ein Gewichtsverhältnis von Si:SiO im ersten Aktivmaterialschichtbereich 95:5 bis 100:0 beträgt,
wobei die Gewichtsverhältnisse von Si und SiO unter Verwendung von Bildern eines Querschnitts der Negativelektroden-Aktivmaterialschicht zum Durchführen einer energiedispersiven Spektroskopie (EDS) gemessen werden.

10. Negativelektrode nach Anspruch 8, wobei das Gewichtsverhältnis von Si:SiO im dritten Aktivmaterialschichtbereich 5:95 bis 0:100 beträgt,
wobei die Gewichtsverhältnisse von Si und SiO unter Verwendung von Bildern eines Querschnitts der Negativelektroden-Aktivmaterialschicht zum Durchführen einer energiedispersiven Spektroskopie (EDS) gemessen werden.

11. Verfahren zum Herstellen der Negativelektrode nach Anspruch 1, wobei das Verfahren umfasst:
Auftragen einer ersten Negativelektrodenzusammensetzung, umfassend: ein Negativelektroden-Aktivmaterial, das Si umfasst, ein Negativelektroden-Leitmaterial und ein Negativelektroden-Bindemittel auf eine Negativelektroden-Stromkollektorschicht; und
Bilden einer Negativelektroden-Aktivmaterialschicht durch Auftragen einer zweiten Negativelektrodenzusammensetzung, die SiO umfasst, auf die erste Negativelektrodenzusammensetzung,
wobei das Si in einer Menge von 60 Gewichtsteilen oder mehr, bezogen auf 100 Gewichtsteile des Negativelektroden-Aktivmaterials in der ersten Negativelektrodenzusammensetzung, umfasst ist,
wobei ein Gewichtsverhältnis von Si:SiO in der Negativelektroden-Aktivmaterialschicht 65:35 bis 85:15 beträgt, und
wobei in der Negativelektroden-Aktivmaterialschicht ein SiO-Gehalt auf der der Oberfläche, die der Negativelektroden-Stromkollektorschicht zugewandt ist, gegenüberliegenden Oberfläche höher ist als ein SiO-Gehalt auf der Oberfläche, die der Negativelektroden-Stromkollektorschicht zugewandt ist.

12. Verfahren nach Anspruch 11, wobei eine Viskosität der ersten Negativelektrodenzusammensetzung niedriger ist als eine Viskosität der zweiten Negativelektrodenzusammensetzung.

13. Verfahren nach Anspruch 11, wobei der Schritt des Auftragens der zweiten Negativelektrodenzusammensetzung, die SiO umfasst, auf die erste Negativelektrodenzusammensetzung ein Nass-auf-Nass-Verfahren umfasst.

14. Lithiumsekundärbatterie, umfassend:
eine Positivelektrode;
die Negativelektrode für eine Lithiumsekundärbatterie nach einem der Ansprüche 1 bis 10;
einen Separator, der zwischen der Positivelektrode und der Negativelektrode vorgesehen ist; und
einen Elektrolyten.

## Revendications

1. Électrode négative pour une batterie secondaire au lithium,
comprenant :
une couche de collecteur de courant d'électrode négative ; et
une couche de matériau actif d'électrode négative disposée sur une surface de la couche de collecteur de courant d'électrode négative,
dans laquelle la couche de matériau actif d'électrode négative comprend une composition d'électrode négative comprenant : un matériau actif d'électrode négative ; un matériau conducteur d'électrode négative ; et un liant d'électrode négative,
le matériau actif d'électrode négative comprend Si et SiO,
un rapport pondéral du Si:SiO est de 65:35 à 85:15, et
dans la couche de matériau actif d'électrode négative, une teneur en SiO sur une surface opposée à la surface faisant face à la couche de collecteur de courant d'électrode négative est supérieure à une teneur en SiO sur la surface faisant face à la couche de collecteur de courant d'électrode négative,
dans laquelle la couche de matériau actif d'électrode négative comprend : une région de jonction comprenant la surface faisant face à la couche de collecteur de courant d'électrode négative ; et une région de surface comprenant la surface opposée à la surface faisant face à la couche de collecteur de courant d'électrode négative,
un rapport pondéral du Si:SiO dans la région de jonction est de 95:5 à 100:0, et
un rapport pondéral du Si:SiO dans la région de surface est de 5:95 à 0:100,
les rapports pondéraux de Si et de SiO étant mesurés en utilisant des images d'une coupe transversale de la couche de matériau actif d'électrode négative pour effectuer une spectroscopie à rayons X à dispersion d'énergie (EDS).

2. Électrode négative selon la revendication 1, dans laquelle la couche de matériau actif d'électrode négative présente un gradient de concentration dans lequel la teneur en SiO augmente dans une direction allant de la surface faisant face à la couche de collecteur de courant d'électrode négative à la surface opposée à la surface faisant face à la couche de collecteur de courant d'électrode négative.

3. Électrode négative selon la revendication 1, dans laquelle le matériau actif d'électrode négative est présent en une quantité de 60 parties en poids ou plus, sur la base de 100 parties en poids de la composition d'électrode négative.

4. Électrode négative selon la revendication 1, dans laquelle le matériau conducteur d'électrode négative comprend : un matériau conducteur plan sélectionné dans le groupe constitué de graphite lamellaire, de graphène, d'oxyde de graphène et de graphite en paillettes ; et un matériau conducteur linéaire sélectionné dans le groupe constitué de nanotubes de carbone.

5. Électrode négative selon la revendication 4, dans laquelle la couche de matériau actif d'électrode négative présente un gradient de concentration dans lequel une teneur en matériau conducteur plan augmente dans une direction allant de la surface faisant face à la couche de collecteur de courant d'électrode négative à la surface opposée à la surface faisant face à la couche de collecteur de courant d'électrode négative.

6. Électrode négative selon la revendication 1, dans laquelle le diamètre moyen de particules D50 de Si est de 1 µm ou plus et de 10 µm ou moins,
le diamètre moyen de particules D50 de SiO est de 1 µm ou plus et de 10 µm ou moins, et
la taille de grains cristallins Si de SiO est de 100 nm ou moins.

7. Électrode négative selon la revendication 4, dans laquelle le matériau conducteur plan est compris en une quantité de 90 parties en poids ou plus et de 99,9 parties en poids ou moins et le matériau conducteur linéaire est compris en une quantité de 0,1 partie en poids ou plus et de 10 parties en poids ou moins, sur la base de 100 parties en poids du matériau conducteur d'électrode négative.

8. Électrode négative selon la revendication 1, dans laquelle la couche de matériau actif d'électrode négative est divisée en trois parties égales dans la direction d'épaisseur, et
est divisée séquentiellement et affichée comme une première région de couche de matériau actif ; une deuxième région de couche de matériau actif ; et la troisième région de couche de matériau actif ; et
la première région de couche de matériau actif est en contact avec la couche de collecteur de courant d'électrode négative, et
la première région de couche de matériau actif inclut 10 parties en poids ou moins de SiO sur la base de 100 parties en poids du matériau actif d'électrode négative, et
la troisième région de couche de matériau actif inclut 80 parties en poids ou plus de SiO sur la base de 100 parties en poids du matériau actif d'électrode négative,
les rapports pondéraux de Si et de SiO étant mesurés en utilisant des images d'une coupe transversale de la couche de matériau actif d'électrode négative pour effectuer une spectroscopie à rayons X à dispersion d'énergie (EDS).

9. Électrode négative selon la revendication 8, dans laquelle un rapport pondéral de Si:SiO dans la première région de couche de matériau actif est de 95:5 à 100:0,
les rapports pondéraux de Si et de SiO étant mesurés en utilisant des images d'une coupe transversale de la couche de matériau actif d'électrode négative pour effectuer une spectroscopie à rayons X à dispersion d'énergie (EDS).

10. Électrode négative selon la revendication 8, dans laquelle le rapport pondéral de Si:SiO dans la troisième région de couche de matériau actif est de 5:95 à 0:100,
les rapports pondéraux de Si et de SiO étant mesurés en utilisant des images d'une coupe transversale de la couche de matériau actif d'électrode négative pour effectuer une spectroscopie à rayons X à dispersion d'énergie (EDS).

11. Procédé destiné à préparer l'électrode négative selon la revendication 1, le procédé comprenant :
le fait d'appliquer une première composition d'électrode négative comprenant : un matériau actif d'électrode négative comprenant Si ; un matériau conducteur d'électrode négative ; et un liant d'électrode négative sur une couche de collecteur de courant d'électrode négative ; et
le fait de former une couche de matériau actif d'électrode négative par application d'une deuxième composition d'électrode négative comprenant SiO sur la première composition d'électrode négative,
dans lequel le Si est compris en une quantité de 60 parties en poids ou plus sur la base de 100 parties en poids du matériau actif d'électrode négative dans la première composition d'électrode négative,
un rapport pondéral de Si:SiO dans la couche de matériau actif d'électrode négative est de 65:35 à 85:15, et
dans la couche de matériau actif d'électrode négative, une teneur en SiO sur une surface opposée à la surface faisant face à la couche de collecteur de courant d'électrode négative est supérieure à une teneur en SiO sur la surface faisant face à la couche de collecteur de courant d'électrode négative.

12. Procédé selon la revendication 11, dans lequel une viscosité de la première composition d'électrode négative est inférieure à une viscosité de la deuxième composition d'électrode négative.

13. Procédé selon la revendication 11, dans lequel l'étape d'application de la deuxième composition d'électrode négative comprenant SiO sur la première composition d'électrode négative comprend un procédé humide sur humide.

14. Batterie secondaire au lithium comprenant :
une électrode positive ;
l'électrode négative pour une batterie secondaire au lithium selon l'une quelconque des revendications 1 à 10 ;
un séparateur disposé entre l'électrode positive et l'électrode négative ; et
un électrolyte.
